# EUROPEAN PATENT APPLICATION

(11) **EP 4 040 006 A1**
(43) Date of publication of application: **10.08.2022**
(21) Application number: 22153344.1
(22) Date of filing: 25.01.2022
(51) Int. Cl.: F16F 6/00, A01K 27/00, F16F 15/03

(54) **DAMPER AND ANTI-IRRITABLE TRACTOR**

(30) Priority: 04.02.2021 CN 202120325583 U; 04.02.2021 CN 202110153756
(71) Applicant: Ningbo Meace Pet Products Co., Ltd., Ningbo City, Zhejiang Province 315000 (CN)
(72) Inventor: Li, Zhengguang, Ningbo City, 315000 (CN); Wu, Fazhi, Ningbo City, 315000 (CN)
(74) Representative: Vesterinen, Jussi Tapio

(57) **Abstract**

The present disclosure provides a damper and an anti-irritable tractor, which relates to the field of pet traction devices and solves the problems that the damper has a short service life and the tractor is easy to lose the anti-irritable effect. The damper comprises a magnetic component and a damping plate, which are magnetically adsorbed and synchronously rotate or stand still when the rotating speed of a winding reel is less than the set speed; when the rotating speed of the winding reel exceeds the set speed, either of the magnetic component and the damping plate is connected with the winding reel, and the other of the magnetic component and the damping plate is connected with a stationary part, and when the magnetic component and the damping plate rotate relatively, the magnetic adsorption force between the magnetic component and the damping plate forms the resistance to limit the rotation of the winding reel. According to the damper, the adsorption force between the magnetic component and the damping plate can form the resistance to limit the rotation of the winding reel. The magnetic component and the damping plate are bonded and magnetically absorbed, and damping materials such as adhesive oil do not need to be filled. The heat generated by friction of the damping materials is reduced, and there is also larger magnetic force in case of abrasion, thus greatly prolonging the service life.

## Description

### TECHNICAL FIELD

The present disclosure relates to the technical field of pet traction devices, and in particular to a damper and an anti-irritable tractor.

### BACKGROUND

When residents take their pets out, they often need to use a pet tractor to limit the range of activities of pets. However, when pets are taken out for activities, pets often irritate. In order to prevent the animals and owners from being hurt by the traction rope when pets irritate and give the owners a certain reaction time, the anti-irritable tractor is crucial.

For the tractors in the prior art, when the rotating speed of the winding reel wound with the traction rope is relatively high, in order to prevent irritableness, most of the tractors need dampers to generate certain resistance to the movement of the winding reel to limit the movement of the winding reel.

The dampers used in anti-irritable tractors in the prior art mainly include the following two structures.

The first damper comprises a damping plate sleeved on a fixed rotating shaft and a rotating member which is rotatable around the fixed rotating shaft. The damping plate is closely attached to the rotating member, and the rotation of the rotating member needs to rub the damping plate to bring the damping effect.

The second damper comprises a stationary part and a rotatable part. The stationary part is fixedly connected with the shell. When the winding reel rotates at a high speed, the winding reel is connected with the rotatable part. A friction filler such as coarse leather or a viscous filler such as viscous oil is filled between the inner cavity of the rotatable part and the stationary part, so that the rotatable part is connected with the stationary part in damping contact, thus bringing the damping effect.

The applicant finds that the prior art has at least the following technical problems.

For the first damper described above, the abrasion of the damping plate and the rotating member affects the adhering effect of the damping plate and the rotating member, and the service life of the damper is short.

For the second damper described above, the damping material is located between the stationary part and the rotatable part and generates heat due to friction. The heat generation is serious and easily leads to product failure. Moreover, damping materials such as viscous oil are easy to leak and reduce, which leads to serious attenuation of damping value of the damper and easily leads to insufficient service life.

To sum up, the damper in the prior art has a short service life, which becomes an urgent problem to be solved. After a period of use, the damper will be invalid, and the pet tractor will lose the damping effect.

### SUMMARY

The purpose of the present disclosure is to provide a damper and an anti-irritable tractor to solve the technical problems in the prior art that the damper in the existing pet tractor has a short service life and is easy to make the tractor lose the anti-irritable effect. Many technical effects that can be produced by the preferred technical scheme among many technical schemes provided by the present disclosure are detailed in the following description.

To achieve the above purpose, the present disclosure provides the following technical scheme.

The damper provided by the present disclosure comprises a magnetic component and a damping plate, wherein:
the magnetic component and the damping plate are magnetically adsorbed and synchronously rotate or stand still when the rotating speed of a winding reel is less than the set speed;
when the rotating speed of the winding reel exceeds the set speed, either of the magnetic component and the damping plate is connected with the winding reel, and the other of the magnetic component and the damping plate is connected with a stationary part, and when the magnetic component and the damping plate rotate relatively, the magnetic adsorption force between the magnetic component and the damping plate forms the resistance to limit the rotation of the winding reel.

Preferably, the magnetic component is provided on the winding reel, and the damping plate is capable of being connected with the stationary part when the rotating speed of the winding reel exceeds the set speed; alternatively, the magnetic component is provided on the stationary part, and the damping plate is capable of being connected with the winding reel when the rotating speed of the winding reel exceeds the set speed;
the magnetic component and the damping plate are rotatable relatively when the acting force of the winding reel is greater than the resistance formed by the magnetic adsorption force.

Preferably, the magnetic component comprises a magnet cover and a magnet which are connected, wherein the magnet cover is provided outside the magnet and fixed with the stationary part or the winding reel, and the damping plate is magnetically adsorbed to the magnet.

Preferably, the damping plate is provided with a limiting rib, the magnetic component is provided with a limiting groove at the position corresponding to the limiting rib, the limiting rib extends into the limiting groove, and the matching structure of the limiting rib and the limiting groove is used to restrict the damping plate from moving up and down.

The present disclosure further provides an anti-irritable tractor, comprising the damper, a winding reel and a shell as a stationary part, wherein the winding reel and the shell are rotatably connected.

Preferably, the anti-irritable tractor further comprises a connecting component which is connected with the winding reel;
when the magnetic component is provided on the winding reel, the connecting component is capable of connecting the damping plate with the shell when the rotating speed of the winding reel exceeds the set speed;
when the magnetic component is provided on the shell, the connecting component is capable of connecting the damping plate with the winding reel when the rotating speed of the winding reel exceeds the set speed.

Preferably, the connecting component comprises a limiting member, an elastic member and a moving member, wherein:
the limiting member limits the moving member on the winding reel; one end of the elastic member is a fixed end, and the other end thereof is connected with the moving member; when the centrifugal force of the moving member is greater than the elastic force of the moving member, the moving member slides or rotates to the side away from the limiting part to connect the damping plate with the shell or the winding reel.

Preferably, the connecting component comprises a sliding sleeve, an elastic sheet and a slider, wherein:
the slider is located in the sliding sleeve, and the sliding sleeve is provided with a limiting gap into which the elastic sheet extends and which prevents the elastic sheet from curling; one end of the elastic sheet is a fixed end, the other end thereof is connected with the slider through the limiting gap, and the slider is slidable away from the sliding sleeve and abuts against the shell or the damping plate when the centrifugal force is greater than the elastic force.

Preferably, the connecting component comprises a retaining ring, a rotating block and a torsion spring, wherein:
the torsion spring is sleeved outside the rotating shaft, one end of the torsion spring is a fixed end, the other end thereof extends into the rotating block and is connected with the first end of the rotating block, and the retaining ring is connected with the rotating block to prevent the rotating block from falling out; the second end of the rotating block is rotatable with the axis of the torsion spring as the axis when the centrifugal force is greater than the elastic force, and abuts against the shell or the damping plate.

Preferably, the anti-irritable tractor further comprises a resisting component with a stopper, and the stopper is located at the periphery of the connecting component and extends towards the connecting component;
when the magnetic component is provided on the winding reel, the stopper is located on the shell and is capable of abutting against the connecting component to connect the damping plate and the shell; when the magnetic component is provided on the shell, the stopper is located at the periphery of the damping plate and is capable of abutting against the connecting component to connect the damping plate and the winding reel.

Compared with the prior art, the present disclosure has the following beneficial effects.
1. According to the damper provided by the present disclosure, the magnetic component and the damping plate are magnetically adsorbed, either of the magnetic component and the damping plate is connected with the winding reel, and the other of the magnetic component and the damping plate is connected with a stationary part. As the winding reel rotates relative to the stationary part, under the above circumstances, when the magnetic component and the damping plate rotate relatively, the magnetic adsorption force between the magnetic component and the damping plate forms the resistance to limit the rotation of the winding reel, thus at least partially offsetting the irritable force of some pets and reducing the irritable speed of pets. Compared with dampers with other structures, the magnetic component and the damping plate are bonded and magnetically absorbed, the structure is simple, damping materials such as adhesive oil do not need to be filled between the magnetic component and the damping plate, the heat generated by friction of the damping materials is reduced, and there is no problem of service life reduction caused by reduction of damping materials. Moreover, there is also larger magnetic force in case of abrasion, and the service life will not be reduced due to the abrasion of the metal sheet. The service life is greatly prolonged.
2. Because of the damper, the anti-irritable tractor provided by the present disclosure also has the advantage of long service life.

### BRIEF DESCRIPTION OF THE DRAWINGS

In order to more clearly explain the embodiments of the present disclosure or the technical solutions in the prior art, the drawings that need to be used in the description of the embodiments or the prior art will be briefly introduced hereinafter. Obviously, the drawings in the following description are only some embodiments of the present disclosure. For those skilled in the art, other drawings can be obtained according to these drawings without creative efforts.
FIG. 1 is an exploded schematic diagram of the structure of a first embodiment of a damper according to the present disclosure.
FIG. 2 is a schematic structural diagram of a first embodiment of an anti-irritable tractor.
FIG. 3 is an exploded schematic structural diagram of a damper and a first connecting component installed on a winding reel.
FIG. 4 is a schematic structural cross-sectional view of a damper installed on a winding reel.
FIG. 5 is a schematic structural diagram of a damper and a first connecting component.
FIG. 6 is a schematic structural diagram of a resisting component on the shell.
FIG. 7 is a schematic structural diagram of a second embodiment of an anti-irritable tractor.
FIG. 8 is an exploded schematic diagram of a damper and a second connecting component installed on a winding reel.
FIG. 9 is a schematic structural diagram of a damper and a second connecting component.
FIG. 10 is a schematic structural diagram of a third embodiment of an anti-irritable tractor.
FIG. 11 is a schematic structural diagram of a damper installed on a shell.
FIG. 12 is a cross-sectional view at A-A in FIG. 11.

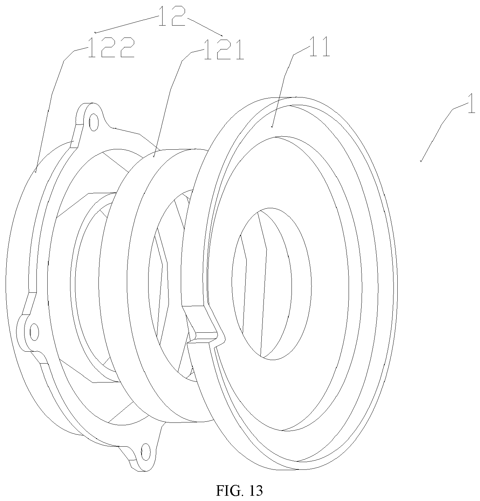

FIG. 13 is a schematic structural diagram of a second embodiment of a damper according to the present disclosure.

In the figures, 1. Damper; 11. Damping plate; 111. Limiting ribs; 12. Magnetic component; 121. Magnet; 122. Magnet cover; 1221. Limiting groove; 2. Winding reel; 3. Shell; 4. Key component; 5. Connecting component; 51. Slider; 52. Elastic sheet; 53. Sliding sleeve; 54. Rotating block; 55. Torsion spring; 56. Retaining ring; 57. Fixing block; 6. Resisting component; 61. Retaining rib; 62. Stopper.

### DETAILED DESCRIPTION OF THE EMBODIMENTS

In order to make the purpose, technical scheme and advantages of the present disclosure clearer, the technical scheme of the present disclosure will be described in detail hereinafter. Obviously, the described embodiments are only part of the embodiments of the present disclosure, rather than all of the embodiments. Based on the embodiments in the present disclosure, all other embodiments obtained by those skilled in the art without making creative efforts are within the scope of protection of the present disclosure.

In the description of the present disclosure, it should be understood that the azimuth or position relationship indicated by the terms "center", "length", "width", "height", "upper", "lower", "front", "rear", "left", "right", "vertical", "horizontal", "top", "bottom", "inner", "outer", "side" is based on the azimuth or position relationship shown in the attached drawings, which is only for the convenience of describing the present disclosure and simplifying the description, and does not indicate or imply that the indicated device or element must have a specific orientation, be constructed and operated in a specific orientation, and therefore cannot be understood as a limitation of the present disclosure. In the description of the present invention, unless otherwise stated, "a plurality of" means two or more.

The embodiment of the present disclosure provides a damper and an anti-irritable tractor which can greatly prolong the service life and reduce the heat generation of the damper.

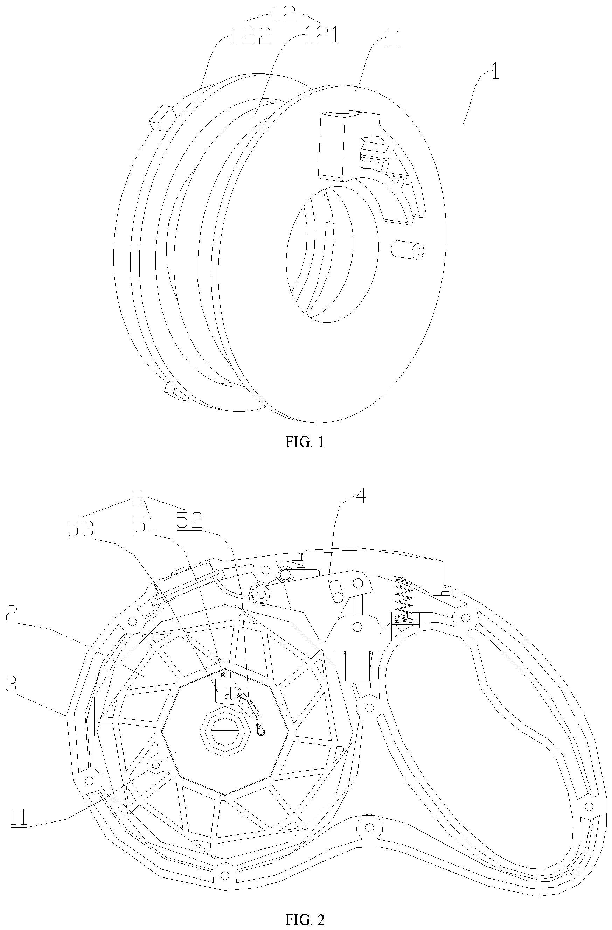

The technical scheme provided by the present disclosure will be described in more detail with reference to FIGS. 1-12.

As shown in FIG. 1-FIG. 12, this embodiment provides a damper 1, which comprises a magnetic component 12 and a damping plate 11, wherein: the magnetic component 12 and the damping plate 11 are magnetically adsorbed and synchronously rotate or stand still when the rotating speed of the winding reel 2 is less than the set speed; when the rotating speed of the winding reel 2 exceeds the set speed, either of the magnetic component 12 and the damping plate 11 is connected with the winding reel 2, and the other of the magnetic component 12 and the damping plate 11 is connected with the stationary part. When the magnetic component 12 and the damping plate 11 rotate relatively, the magnetic adsorption force between the magnetic component and the damping plate forms the resistance to limit the rotation of the winding reel 2.

The damping plate 11 can be made of a metal material or a magnet capable of mutual adsorption with the magnetic component 12, so as to realize magnetic adsorption with the magnetic component 12.

According to the damper 1 in this embodiment, the magnetic component 12 and the damping plate 11 are magnetically adsorbed, either of the magnetic component and the damping plate is connected with the winding reel 2, and the other of the magnetic component and the damping plate is connected with a stationary part. As the winding reel 2 rotates relative to the stationary part, under the above circumstances, when the magnetic component 12 and the damping plate 11 rotate relatively, the magnetic adsorption force between the magnetic component 12 and the damping plate 11 forms the resistance to limit the rotation of the winding reel 2, thus at least partially offsetting the irritable force of some pets and reducing the irritable speed of pets.

Compared with dampers 1 with other structures, the magnetic component 12 and the damping plate 11 are bonded and magnetically absorbed, the structure is simple, damping materials such as adhesive oil do not need to be filled between the magnetic component and the damping plate, the heat generated by friction of the damping materials is reduced, and there is no problem of service life reduction caused by reduction of damping materials. Moreover, there is also larger magnetic force in case of abrasion, the influence of abrasion on the magnetic adsorption force is small, and the service life will not be reduced due to the abrasion of the metal sheet. The service life is greatly prolonged.

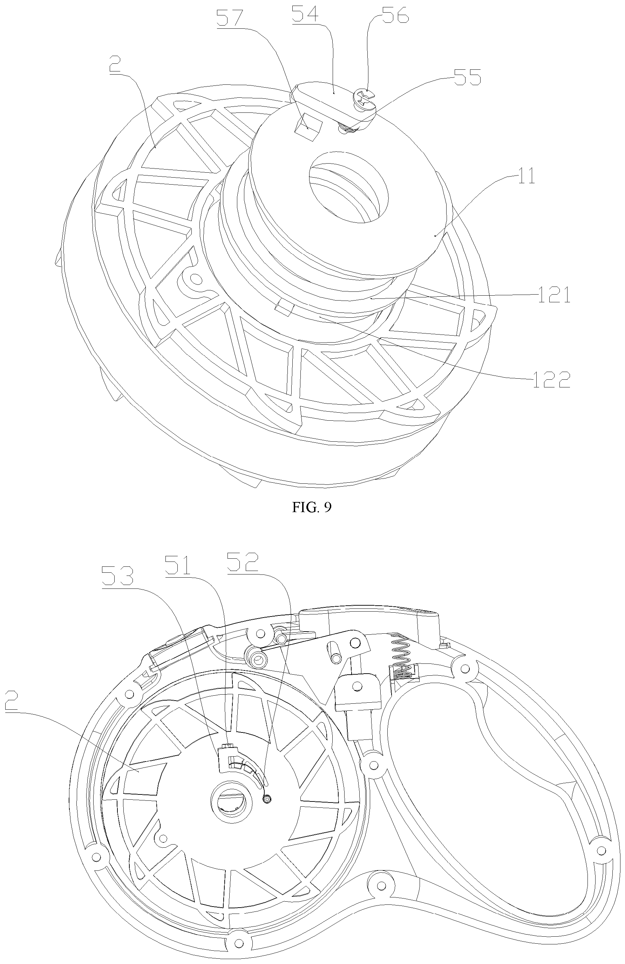

As an alternative embodiment, as shown in FIGS. 2-9, the magnetic component 12 is provided on the winding reel 2, and the damping plate 11 is capable of being connected with the stationary part when the rotating speed of the winding reel 2 exceeds the set speed. Alternatively, as shown in FIGS. 10-12, the magnetic component 12 is provided on the stationary part such as the shell 3, and the damping plate 11 is capable of being connected with the winding reel 2 when the rotating speed of the winding reel 2 exceeds the set speed.

Alternatively, the damping plate 11 is provided on the winding reel 2, and the magnetic component 12 is capable of being connected with the stationary part when the rotating speed of the winding reel 2 exceeds the set speed. Alternatively, the damping plate 11 is provided on the stationary part such as the shell 3, and the magnetic component 12 is capable of being connected with the winding reel 2 when the rotating speed of the winding reel 2 exceeds the set speed.

The magnetic component 12 and the damping plate 11 are rotatable relatively when the acting force of the winding reel 2 is greater than the resistance formed by the magnetic adsorption force between the magnetic component and the damping plate, and are synchronously stationary or synchronously rotate when the acting force of the winding reel 2 is less than the resistance formed by the magnetic adsorption force between the magnetic component and the damping plate.

In this embodiment, the damping force between the magnetic component 12 and the damping plate 11 is the resistance formed by the magnetic adsorption force between the magnetic component and the damping plate when the magnetic component and the damping plate rotate relatively, rather than the frictional resistance between the nonmetallic sheets or the frictional force generated by the damping material, and will not fail due to the abrasion of the metal sheets or the reduction of the damping material. The service life is long. The heat generated by friction is reduced.

When the rotating speed of the winding reel 2 exceeds the set speed, one of the damping plate 11 and the magnetic component 12 is connected with the winding reel 2, and the other of the damping plate and the magnetic component is connected with the stationary part. When the damping plate and the magnetic component rotate relatively, the resistance formed by the magnetic adsorption force limits the relative rotation between the damping plate and the magnetic component, that is, the resistance for limiting the rotation of the winding reel 2 is formed, which limits the irritable speed of pets, gives the owner a certain reaction time and reduces the damage to pets and owners.

As an alternative embodiment, as shown in FIG. 1, FIG. 3, FIG. 4, FIG. 8 and FIG. 12, the magnetic component 12 comprises a magnet 121 and a magnet cover 122 which are connected with each other, wherein the magnet cover 122 covers the magnet 121 and is fixed with the stationary part or the damping plate 11, the magnet cover 122 can be made of a magnetic conductive metal material, and the damping plate 11 is magnetically adsorbed to the magnet 121.

The damping plate 11 is made of metal. The magnet 121 is a strong magnet, such as NdFeB, which has strong magnet adsorption and can firmly fix the damping plate 11. The magnet cover 122 is made of magnetic conductive metal material to supplement the magnetic force for the magnet 121. The magnet cover 122 has the functions of fixing the magnet 121 and enhancing the magnetic force of the magnet 121. The magnet 121 provided with the magnet cover 122 greatly improves the magnetic force, so that the damping plate 11 can be firmly adsorbed without other fixing structures.

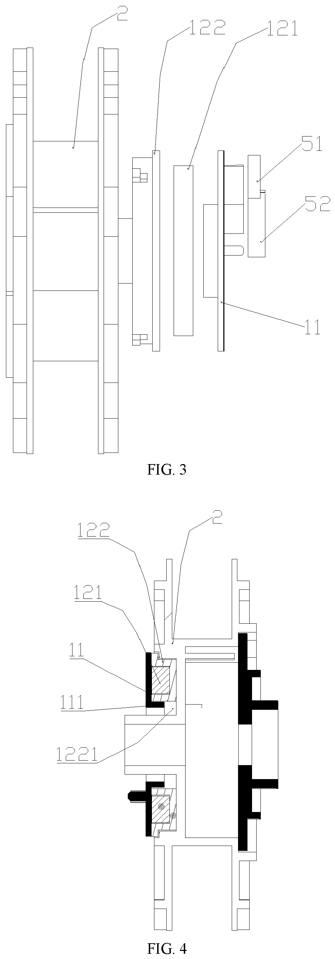

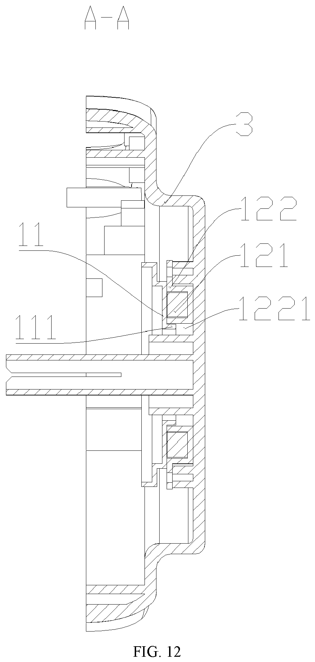

The damping plate 11 and the magnet 121 described above are completely fixed by the magnetic force, which will not affect the relative rotation of the damping plate and the magnet when the winding reel 2 rotates at high speed. The structure is simple. In order to prevent the damping plate 11 from shifting up and down relative to the magnetic component 12. As an alternative embodiment, as shown in FIGS. 4 and 12, the magnetic component 12 is provided on the winding reel 2 in FIG. 4, and the magnetic component 12 is provided on the shell 3 in FIG. 12. The damping plate 11 is provided with a limiting rib 111, and the magnetic component 12 is provided with a limiting groove 1221 at the position corresponding to the limiting rib 111. The limiting rib 111 extends into the limiting groove 1221, and the matching structure of the limiting rib and the limiting groove is used to restrict the damping plate 11 from moving up and down.

Specifically, as shown in FIGS. 4 and 12, the limiting groove 1221 is provided in the middle of the magnet cover 122. Preferably, the limiting groove 1221 and the limiting rib 111 are coaxially provided, and the matching structure of the limiting groove 1221 and the limiting rib 111 can prevent the damping plate 11 from being separated from the magnetic component 12 due to moving up and down when the damping plate 11 and the magnetic component 12 rotate relatively, so that the structural stability can be ensured.

The embodiment of the present disclosure provides an anti-irritable tractor, which comprises the damper 1, a winding reel 2 and a shell 3 as a stationary part, wherein the winding reel 2 and the shell 3 are rotatably connected. The shell 3 is further provided with a key component 4. As shown in FIG. 2, the key component 4 can adopt the structure in the prior art, which is not specifically limited here. When the key component 4 is not pressed, the traction rope wound on the winding reel 2 can be released when the pet pulls. The pet moves to pull the traction rope to rotate around the winding reel 2. When the key component 4 is pressed, the key component 4 restricts the rotation of the winding reel 2, and it is difficult for the pet to continue pulling out the traction rope.

The anti-irritable tractor of this embodiment also has the advantage of long service life because of the damper 1.

Three specific embodiments of the anti-irritable tractor are provided hereinafter.

### Embodiment 1

As shown in FIG. 2-FIG. 6, the anti-irritable tractor in this embodiment comprises the damper 1 in FIG. 1. The damper 1 is provided on the winding reel 2, and the specific magnetic component 12 is fixed on the winding reel 2. When the speed of the winding reel 2 is less than the set speed, the magnetic component 12 and the damping plate 11 rotate synchronously with the winding reel 2. When the speed of the winding reel 2 exceeds the set speed, the damping plate 11 is connected with the stationary part on the shell 3. When the magnetic component 12 and the damping plate 11 rotate relatively, the magnetic adsorption force between the magnetic component and the damping plate forms a resistance to restrict the relative movement of the magnetic component and the damping plate.

When the speed of the winding reel 2 exceeds the set speed, the damping plate 11 is connected with the stationary part on the shell 3. As an alternative embodiment, the anti-irritable tractor further comprises a connecting component 5. In this embodiment, the connecting component 5 is connected with the winding reel 2. As shown in FIG. 2-FIG. 5, in this embodiment, the connecting component 5 is provided on the damping plate 11. The magnetic component 12 is provided on the winding reel 2. The connecting component 5 can connect the damping plate 11 with the shell 3 when the rotating speed of the winding reel 2 exceeds the set speed.

Alternatively, the damping plate 11 is fixed on the winding reel 2, and the connecting component 5 is provided on the magnetic component 12. The connecting component 5 can connect the magnetic component 12 with the shell 3 when the rotating speed of the winding reel 2 exceeds the set speed.

The above connecting component 5 can connect the damping plate 11 with the shell 3 when the winding reel 2 exceeds the set rotating speed. When the acting force of the magnetic component 12 subjected to the winding reel 2 is greater than the resistance formed by the magnetic adsorption force between the magnetic component 12 and the damping plate 11, the magnetic component 12 and the damping plate 11 can rotate relatively.

As an alternative embodiment, the above connecting component 5 comprises a limiting member, an elastic member and a moving member, wherein: the limiting member limits the moving member on the winding reel 2; one end of the elastic member is a fixed end, and the other end thereof is connected with the moving member; the moving member is connected with the winding reel 2. When the speed of the winding reel 2 is fast, the moving member has a large centrifugal force. When the speed of the winding reel 2 increases to a set speed, the centrifugal force of the moving member is greater than the elastic force of the moving member, and the moving member overcomes the elastic force and moves to a position away from the limiting member, thus realizing the connection between the damping plate 11 and the shell 3.

Specifically, as shown in FIGS. 2-6, the connecting component 5 comprises a sliding sleeve 53 as the limiting member, an elastic sheet 52 as the elastic member and a slider 51 as the moving member, wherein the slider 51 is located in the sliding sleeve 53, and the sliding sleeve 53 is provided with a limiting gap into which the elastic sheet 52 extends and which prevents the elastic sheet from curling; one end of the elastic sheet is a fixed end, the other end thereof is connected with the slider 51 through the limiting gap, and the slider 51 is slidable away from the sliding sleeve 53 and abuts against the shell 3 or the damping plate 11 when the centrifugal force is greater than the elastic force.

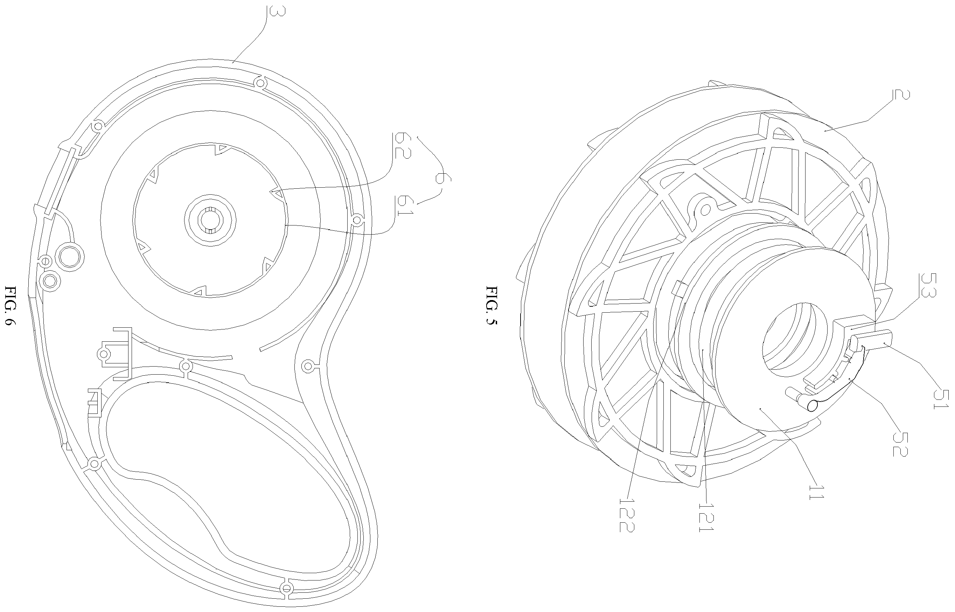

The sliding sleeve 53 can fix the slider 51 on the damping plate 11 and is located at the periphery of the damping plate 11. The elastic sheet 52 provides the elastic force for the slider 51 to reset. When the speed of the winding reel 2 reaches the set speed, the centrifugal force of the slider 51 increases until it is greater than the elastic force of the elastic sheet 52. The slider 51 slides away from the sliding sleeve 53 and slides to the position protruding from the periphery of the damping plate 11, as shown in FIG. 5, and is connected with the stationary part on the shell 3. The slider 51 is connected with the stationary part to limit the rotation of the damping plate 11. The resistance formed by the magnetic adsorption force between the damping plate 11 and the magnetic component 12 limits the rotation of the winding reel 2 and the movement speed of the pet. After the movement speed of the pet is limited and reduced, when the elastic force of the slider 51 subjected to the elastic sheet 52 is greater than the centrifugal force, the elastic force of the elastic sheet 52 pulls the slider 51 to reset.

In order to enable the slider 51 to be connected with the stationary parts on the shell 3, as shown in FIG. 6, the anti-irritable tractor further comprises a resisting component 6 with a stopper 62, and the stopper 62 is located at the periphery of the connecting component 5 and extends towards the connecting component 5. When the magnetic component 12 is provided on the winding reel 2, the stopper 62 is located on the shell 3 and can abut against the connecting component 5 to connect the damping plate 11 and the shell 3.

As shown in FIG. 6, the above stopper 62 is provided on the shell 3 and located at the periphery of the damping plate 11. When the slider 51 slides out, as shown in the state of FIG. 5, the stopper 62 can abut against the slider 51. The stopper 62 limits the rotation of the slider 51, thereby limiting the rotation of the damping plate 11. The resistance formed by the magnetic adsorption force between the damping plate 11 and the magnetic component 12 limits the rotation of the winding reel 2, which generates resistance to the winding reel 2 and reduces the irritable speed of pets. When the acting force of the pet on the winding reel 2 through the traction rope is less than or equal to the resistance of the winding reel 2 formed by the magnetic adsorption force between the magnetic component 12 and the damping plate 11, the resistance can offset the acting force on the winding reel 2 of the pet. When the acting force of the pet on the winding reel 2 through the traction rope is greater than the resistance of the winding reel 2 between the magnetic component 12 and the damping plate 11, the resistance can offset the acting force of the pet on part of the winding reel 2.

Under the centrifugal force, the slider 51 slides out of the sliding sleeve 53 to a position protruding from the periphery of the damping plate 11, so that the movement is smoother, and there is no jam problem.

Specifically, in this embodiment, the resisting component 6 comprises a retaining rib 61 and a stopper 62. As shown in FIG. 6, the retaining rib 61 is annular, and the stopper 62 is provided inside the retaining rib 61. The stopper 62 is spaced apart from the winding reel 2, that is, the stopper 62 is not in contact with the winding reel 2, so as to prevent the winding reel 2 from rotating. The retaining rib 61 extends towards the winding reel 2. The number of the above stoppers 62 is one or more, which is not specifically limited. As shown in FIGS. 2-6, when the magnetic component 12 in this embodiment is provided on the winding reel 2, the retaining rib 61 and the stopper 62 are located on the shell 3, and the structure that the stopper 62 abuts against the connecting component 5 connects the damping plate 11 and the shell 3.

The resisting component 6 formed by the retaining rib 61 and the stopper 62 is connected with the slider 51 as a stationary part, so that the damper 1 generates resistance to limit the rotation of the winding reel 2, thereby limiting the rotation of the winding reel 2, reducing the irritableness speed of the pet, giving the owner a certain reaction time and reducing the damage to the pet and the owner.

### Embodiment 2

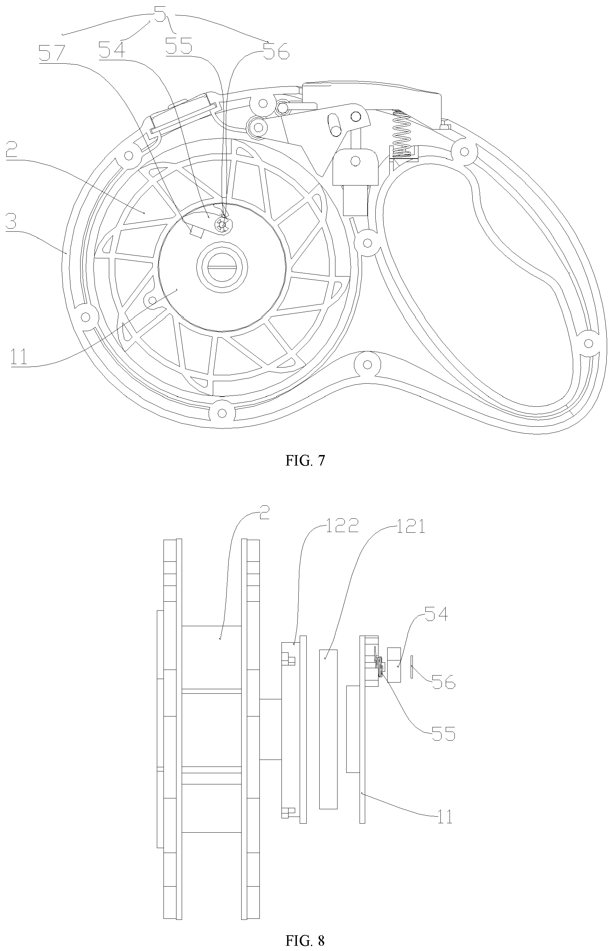

As shown in FIGS. 7-9, this embodiment provides another specific embodiment of the connecting component 5. The connecting component 5 in this embodiment comprises a retaining ring 56, a rotating block 54 as a moving member and a torsion spring 55 as an elastic member, wherein the torsion spring 55 is sleeved outside the rotating shaft, one end of the torsion spring 55 is a fixed end, the other end thereof extends into the rotating block 54 and is connected with the first end of the rotating block 54, and the retaining ring 56 is connected with the rotating block 54 to prevent the rotating block 54 from falling out; the second end of the rotating block 54 is rotatable with the axis of the torsion spring 55 as the axis when the centrifugal force is greater than the elastic force, and abuts against the shell 3 (or the rotating block 54 and the damping plate 11 or the magnetic component 12 as in the third embodiment).

Preferably, as shown in FIG. 7, the damping plate 11 is further provided with a fixing block 57 for resisting the rotating block 54. The fixing block 57 serves as a limiting member to prevent the rotating block 54 from being far away from the periphery of the damping plate 11 and being difficult to be connected with the shell 3 under the centrifugal force.

The torsion spring 55 provides elastic force for restoring the position of the rotating block 54. When the centrifugal force of the rotating block 54 is less than or equal to the elastic force, the rotating block 54 is located on the damping plate 11. When the centrifugal force of the rotating block 54 is greater than the elastic force, the second end of the rotating block 54 rotates with the axis of the torsion spring 55 as the axis, and is connected with the resisting component 6 on the shell 3 at a position protruding from the periphery of the damping plate 11.

The above resisting component 6 can adopt the same structure as in the above embodiment.

### Embodiment 3

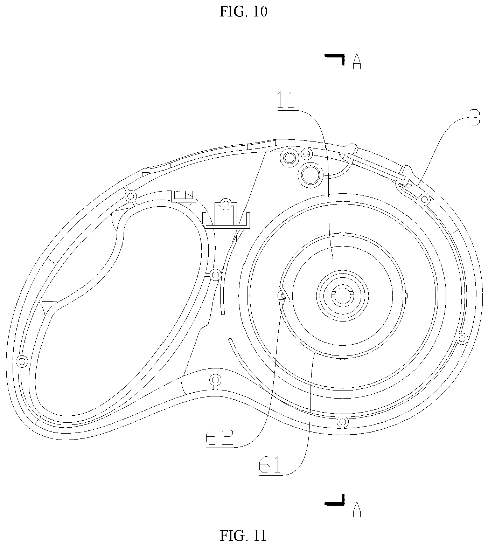

The difference between this embodiment and embodiments 1 and 2 is that, as shown in FIGS. 7-9, the damper 1 of this embodiment is provided on the shell 3 (as shown in FIGS. 11 and 12), and the connecting component 5 is provided on the winding reel 2 (as shown in FIG. 10). The damping plate 11 and the magnetic component 12 synchronously stand still when the rotating speed of the winding reel 2 is lower than or equal to the set speed; the damping plate 11 can be connected with the winding reel 2 through the connecting component 5 when the rotating speed of the winding reel 2 exceeds the set speed. The connecting component 5 can adopt the structure of the above embodiment 1 or embodiment 2, which will not be described in detail here.

As shown in FIG. 12, the magnet cover 122 can be fixed on the shell 3 by locking members such as screws, and the position where the magnet cover 122 is matched with the damping plate 11 is further provided with the limiting rib 111 and the limiting groove 1221 described above.

Alternatively, the damping plate 11 is fixed to the shell 3 locking members such as screws, and the magnetic component formed by the magnet 121 and the magnet cover 122 can be connected with the winding reel 2 through the connecting component 5 when the rotating speed of the winding reel 2 exceeds the set speed.

In order to realize the connection between the connecting component 5 and the damping plate 11 on the winding reel 2, the resisting component 6 in this embodiment is provided on the periphery of the damping plate 11, as shown in FIG.s 11 and 13. Specifically, the retaining rib 61 is located on the periphery of the damping plate 11, and the stopper 62 is provided in the inner ring of the retaining rib 61. The structure that the stopper 62 abuts against the connecting component 5 connects the damping plate 11 and the winding reel 2.

When working specifically, the connecting component 5 moves synchronously with the winding reel 2, and the magnetic component 12 and the damping plate 11 in the damper 1 are located on the shell 3 and synchronously stand still. When the pet pulls the traction rope to increase the speed of the winding reel 2 to the set speed, the centrifugal force of the slider 51 (or the rotating block 54) is greater than the elastic force, the slider 51 (or the rotating block 54) slides (or rotates) to the position where the slider abuts against the stopper 62 on the damping plate 11, the winding reel 2 is connected with the damping plate 11. The resistance formed by the magnetic adsorption force between the damping plate 11 and the magnetic component 12 on the shell 3 limits the rotation of the winding reel 2, reducing the irritableness speed of the pet, and giving the owner a certain reaction time.

The above three embodiments are only examples, and the anti-irritable tractor is provided with the damper 1, so that the service life of the tractor is prolonged, the generated heat of the damper 1 is reduced, the installation is simple, and the structure is compact.

In the description of this specification, specific features, structures or characteristics can be combined in any one or more embodiments or examples in a suitable way.

The above is only the specific embodiment of the present disclosure, but the scope of protection of the present disclosure is not limited thereto. Any changes or substitutions conceivable to those skilled in the art within the technical scope disclosed by the present disclosure should be covered by the scope of protection of the present disclosure. Therefore, the scope of protection of the present disclosure should be based on the scope of protection of the claims.

## Claims

1. A damper comprising a magnetic component and a damping plate, wherein:
the magnetic component and the damping plate are magnetically adsorbed and synchronously rotate or stand still when the rotating speed of a winding reel is less than the set speed;
when the rotating speed of the winding reel exceeds the set speed, either of the magnetic component and the damping plate is connected with the winding reel, and the other of the magnetic component and the damping plate is connected with a stationary part, and when the magnetic component and the damping plate rotate relatively, the magnetic adsorption force between the magnetic component and the damping plate forms the resistance to limit the rotation of the winding reel.

2. The damper according to claim 1, wherein the magnetic component is provided on the winding reel, and the damping plate is capable of being connected with the stationary part when the rotating speed of the winding reel exceeds the set speed; alternatively, the magnetic component is provided on the stationary part, and the damping plate is capable of being connected with the winding reel when the rotating speed of the winding reel exceeds the set speed;
the magnetic component and the damping plate are rotatable relatively when the acting force of the winding reel is greater than the resistance formed by the magnetic adsorption force.

3. The damper according to claim 1, wherein the magnetic component comprises a magnet cover and a magnet which are connected, wherein the magnet cover is provided outside the magnet and fixed with the stationary part or the winding reel, and the damping plate is magnetically adsorbed to the magnet.

4. The damper according to any one of claims 1-3, wherein the damping plate is provided with a limiting rib, the magnetic component is provided with a limiting groove at the position corresponding to the limiting rib, the limiting rib extends into the limiting groove, and the matching structure of the limiting rib and the limiting groove is used to restrict the damping plate from moving up and down.

5. An anti-irritable tractor, comprising the damper according to any one of claims 1-4, a winding reel and a shell as a stationary part, wherein the winding reel and the shell are rotatably connected.

6. The anti-irritable tractor according to claim 5, wherein the anti-irritable tractor further comprises a connecting component which is connected with the winding reel;
when the magnetic component is provided on the winding reel, the connecting component is capable of connecting the damping plate with the shell when the rotating speed of the winding reel exceeds the set speed;
when the magnetic component is provided on the shell, the connecting component is capable of connecting the damping plate with the winding reel when the rotating speed of the winding reel exceeds the set speed.

7. The anti-irritable tractor according to claim 6, wherein the connecting component comprises a limiting member, an elastic member and a moving member, wherein:
the limiting member limits the moving member on the winding reel; one end of the elastic member is a fixed end, and the other end thereof is connected with the moving member; when the centrifugal force of the moving member is greater than the elastic force of the moving member, the moving member slides or rotates to the side away from the limiting part to connect the damping plate with the shell or the winding reel.

8. The anti-irritable tractor according to claim 6 or claim 7, wherein the connecting component comprises a sliding sleeve, an elastic sheet and a slider, wherein:
the slider is located in the sliding sleeve, and the sliding sleeve is provided with a limiting gap into which the elastic sheet extends and which prevents the elastic sheet from curling; one end of the elastic sheet is a fixed end, the other end thereof is connected with the slider through the limiting gap, and the slider is slidable away from the sliding sleeve and abuts against the shell or the damping plate when the centrifugal force is greater than the elastic force.

9. The anti-irritable tractor according to claim 6 or claim 7, wherein the connecting component comprises a retaining ring, a rotating block and a torsion spring, wherein:
the torsion spring is sleeved outside the rotating shaft, one end of the torsion spring is a fixed end, the other end thereof extends into the rotating block and is connected with the first end of the rotating block, and the retaining ring is connected with the rotating block to prevent the rotating block from falling out; the second end of the rotating block is rotatable with the axis of the torsion spring as the axis when the centrifugal force is greater than the elastic force, and abuts against the shell or the damping plate.

10. The anti-irritable tractor according to claim 6 or 7, wherein the anti-irritable tractor further comprises a resisting component with a stopper, and the stopper is located at the periphery of the connecting component and extends towards the connecting component;
when the magnetic component is provided on the winding reel, the stopper is located on the shell and is capable of abutting against the connecting component to connect the damping plate and the shell; when the magnetic component is provided on the shell, the stopper is located at the periphery of the damping plate and is capable of abutting against the connecting component to connect the damping plate and the winding reel.
